# EUROPÄISCHE PATENTSCHRIFT

(11) **EP 1 034 615 B1**
(45) Veröffentlichungstag und Bekanntmachung des Hinweises auf die Patenterteilung: **13.02.2002**
(21) Anmeldenummer: 98962237.8
(22) Anmeldetag: 09.11.1998
(51) Int. Cl.: H02P 7/638

(54) **STEUERUNG FÜR EINEN STROMWENDERMOTOR**
COMMUTATOR MOTOR CONTROL SYSTEM
COMMANDE POUR MOTEUR A COLLECTEUR

(30) Priorität: 25.11.1997 DE 19752070; 10.02.1998 DE 19805182; 12.08.1998 WO PCT/DE98/02317
(43) Veröffentlichungstag der Anmeldung: 13.09.2000
(73) Patentinhaber: Metabo-Werke GmbH & Co., 72622 Nürtingen (DE)
(72) Erfinder: Rottmerhusen, Hans Hermann, 25782 Tellingstedt (DE)
(74) Vertreter: Elbertzhagen, Otto, Dipl.-Ing.
(86) Internationale Anmeldenummer: DE9803282
(87) Internationale Veröffentlichungsnummer: WO9927643

(56) Entgegenhaltungen:
- EP-A- 0 633 095
- EP-A- 0 723 333
- EP-A- 0 724 935
- EP-A- 0 734 116

## Beschreibung

Die Erfindung bezieht sich auf eine Steuerung nach dem Oberbegriff des Anspruchs 1.

Stromwendermotoren sind durch die Zuordnung einer Elektronik in ihrer Drehzahl variabel steuerbar. Eine derartige Elektronik kann beispielsweise eine Phasenanschnittsteuerung bei Wechselstrombetrieb oder einen Pulsweitenmodulator bei Gleichstrombetrieb beinhalten. Solche steuerbaren Stromwendermotoren kommen auch vorteilhaft bei Elektrohandwerkzeugen zur Anwendung.

Es gibt Anwendungsfälle für Elektrohandwerkzeuge, beispielsweise bei kraftaufwendigen Schraubarbeiten und sicherem Bohren in Blech und Aluminium, bei denen es von Vorteil ist, wenn das Elektrowerkzeug mit einer Elektronik versehen ist, womit ein an- und abschwellendes Drehmoment bzw. eine gepulste Drehzahl bei einem Stromwendermotor erzielbar ist.

Eine solche Elektronik ist aus der DE 195 01 430 A 1 bekannt. Dort wird ein Verfahren zur Ansteuerung eines Elektromotors beschrieben, das bei Elektrowerkzeugen Anwendung findet. Der Elektromotor (1) wird mit veränderbaren Pulsen (11, 11',20) einer elektrischen Spannung (U) derart beaufschlagt, so daß sich der Rotor des Elektromotors mit einer einstellbaren Drehzahl (n 1, n 2) bewegt. Hierfür kommen Phasenanschnittsteuerungen oder Pulsweitenmodulatoren zur Anwendung. Die ruck- bzw. stoßartige Bewegung des Rotors des Elektromotors (1) wird dadurch erzielt, daß Teile von einzelnen Pulsen (11, 11', 20) durch Überlagerung einer Pulspause (12, 12', 22) mit einer Nullspannung ausgeblendet werden.
Desweiteren wird eine Schaltungsanordnung in der DE 195 01 430 A 1 zur Ansteuerung eines Elektromotors (1) mit einer Steuerelektronik (5) und einem elektronischen Leistungsschalter (4) beschrieben, bei der der elektronische Leistungsschalter (4) von der Steuerelektronik (5) derart geschaltet wird, daß über den elektronischen Leistungsschalter (4) veränderbare Pulse (11, 11', 20) einer elektrischen Spannung(U) an den Elektromotor (1) zum Betrieb des Elektromotors mit einer voreingestellten Drehzahl (n 1, n 2) anlegbar sind.
Die ruck- bzw. stoßartige Bewegung des Rotors des Elektromotors (1) wird hier dadurch erzielt, daß die Steuerelektronik (5) Mittel zum Ausschalten des elektronischen Leistungsschalters (4) während wenigstens Teilen von wenigsten einzelnen Pulsen (11, 11', 20) enthält.

Der Nachteil einer derartigen Ansteuerung eines Elektromotors besteht darin, daß beispielsweise bei einer Phasenanschnittsteuerung jeweils eine stetige Anzahl von Halbwellen einer Wechselstromspannung komplett ausgeblendet werden. Diese Maßnahme ist besonders bei einer kleinen Drehzahl, also beim großen Anschnitt der verbleibenden Halbwellen, störend, da bei einer kleinen Drehzahl während eines Schraubvorganges eine kontinuierliche Drehzahl vorteilhafter ist.

Aus der EP 0 784 884 B1 ist eine Elektronik bekannt, womit auch eine ruckende Drehzahl einstellbar ist. Hier wird ein Elektro-Schraubwerkzeug mit einem Universalmotor (1) beschrieben, das mittels einer Phasenanschnittsteuerung (3) zur Bestimmung variabler Drehzahlen betrieben ist, wobei die Phasenanschnittsteuerung (3) auf eine wellenpaketgesteuerte Phasenanschnittsteuerung umschaltbar ist. Bei der wellenpaketgesteuerten Phasenanschnittsteuerung werden auch nicht alle Halbwellen des Netzes durchgesteuert. Das Durchsteuern und nicht Durchsteuern der Halbwellen wird mit einem Oszillator (4) erzielt, der der Phasenanschnittsteuerung zuschaltbar ist. Je weiter die Frequenz des Oszillators (4) unterhalb der Netzfrequenz von 50 Hz liegt, um so weniger Halbwellen des Netzes werden durchgesteuert.

Die Wirkungsweise dieser Steuerung entspricht die der DE 195 01 430 A 1, und somit ist auch der Nachteil der gleiche.

In der Offenlegungsschrift DE 196 09 986 A1 wird ein Verfahren zum Betreiben eines Elektromotors beschrieben, bei dem eine Elektronik zur Anwendung kommt, womit eine erste, eine zweite und eine dritte Drehzahl erzielbar ist. Bei Wechselstrombetrieb des Elektromotors besteht die Elektronik aus einer Phasenanschnittsteuerung, und der Elektromotor kommt bei Elektroschraubwerkzeugen zur Anwendung. Mit der ersten voreingestellten Drehzahl wird die Schraube solange eingedreht, bis der Schraubenkopf in die Nähe der Materialoberfläche kommt, erste Betriebsphase. Wird das zuvor eingestellte Grenzdrehmoment erreicht, so wird über die Elektronik der Elektromotor in einer weiteren Betriebsphase umgeschaltet, und der Motor wird nun derart angesteuert, daß durch Drehmomentpausen einer bestimmten Länge ein periodisch unterbrochenes sogenanntes Nachdrehmoment vom Elektromotor ausgeübt wird. In der zweiten Betriebsphase erfolgt ein periodisches Wiedereinschalten des elektronischen Schalters, wobei die Pausen des Wiedereinschaltens bis zu einer Sekunde betragen kann, Spalte 7, Zeile 5 bis 10.
Hier handelt es sich einerseits um ein Verfahren, bei dem eine Phasenanschnittsteuerung auf eine Wellenpaketsteuerung umschaltbar ist, Spalte 5, Zeile 30 bis 51, ähnlich des Verfahrens aus der EP 0 784 884 B1.
Andererseits wird in dieser Schrift offenbart, daß die zweite Drehzahl einem minimalen Stromflußwinkel entspricht, Sp. 6, Z. 53 bis 56, Sp.7, Z. 52 bis 56.
Aus der Beschreibung und der Zeichnung dieser Schrift geht hervor, daß die Elektronik der Phasenanschnittsteuerung mindestens zwei bzw. drei Betriebszustände bei einem Elektrowerkzeug bewirkt, wobei der erste und der zweite bzw. der dritte Betriebszustand von der Höhe der Stromaufnahme des Elektromotors abhängig ist. Wird die zuvor eingestellte Schwelle der Stromaufnahme überschritten, so schaltet die Elektronik vom ersten Betriebszustand, bei der der Elektromotor des Elektrowerkzeugs mit variablen einstellbaren kontinuierlichen stetigen Drehzahlen betreibbar ist, in den zweiten und dritten Betriebszustand um, bei denen der Elektromotor ein mehr oder minder ruckendes Drehverhalten aufweist.

Das Verfahren nach der DE 196 09 986 A1 mit den bis zu drei Betriebszuständen während eines Schraubvorganges mit einem Elektrowerkzeug hat den Nachteil, daß der Übergang von einem kontinuierlichen, stetigen Drehverhalten des Elektromotors zu einem ruckenden Drehverhalten nicht gleitend, sondern abrupt erfolgt.

DE 35 34 052 A1 beschreibt ein Verfahren zur Erzeugung eines Alarms bei Überlastung im Betrieb eines Elektrowerkzeugs, das dem Benutzer einen eindeutigen nicht übersehbaren Hinweis auf den Überlastungszustand gibt. Das beschriebene Verfahren bewirkt bei einem Überlastungszustand eine Absenkung der dem Elektrowerkzeug zugeführten Leistung, wodurch die Drehzahl des Elektromotors reduziert wird, und anschließend erfolgt zusätzlich ein zyklisches Anheben und Absenken der reduzierten zugeführten Leistung, wodurch die Drehzahl des Elektromotors bei abgesenkter Leistung hin- und herpendelt, bis der Überlastzustand beendet ist. Zur Drehzahlsteuerung ist dem Elektrowerkzeug eine mikrokontrollergesteuerte Phasenanschnittsteuerung zugeordnet.

Das hier beschriebene Verfahren findet für Schraub- und Bohrarbeiten mit einem Elektrowerkzeug keine Anwendung, da eine Absenkung der reduzierten zugeführten hin- und herpendelnden Leistung für solche Anwendungen ungeeignet ist.

Der Erfindung liegt die Aufgabe zugrunde eine Steuerung für einen Stromwendermotor zu schaffen, womit ein gleitender sanfter Übergang von einem stetigen Drehverhalten des Motors zu einem bei einem kontinuierlich ansteigenden Drehmoment ein sich entsprechend proportional verstärkendes ruckendes Drehverhalten des Motors erzielt wird.

Diese Aufgabe wird durch die Merkmale des unabhängigen Anspruchs 1 gelöst. Vorteilhafte Ausgestaltungsmerkmale der Erfindung sind den übrigen Ansprüchen und der Beschreibung zu entnehmen.

Der Vorteil der erfindungsgemäßen Steuerung für einen Stromwendermotor liegt darin, daß der Phasenanschnittsteuerung Steuereinrichtungen zugeordnet sind, womit ein erster Anschnitt der Halbwellen einer Wechselstromspannung in erste Bereichsabschnitte und ein zweiter Anschnitt der Halbwellen in zweite Bereichsabschnitte durchführbar ist mit dem Zweck, daß bei einer kleinen Drehzahl und einem kleinen Drehmoment ein stetiges Drehverhalten des Motors und bei einem kontinuierlich ansteigendem Drehmoment proportional zum Drehmoment ein sanfter Übergang zu einem sich verstärkenden ruckenden Drehverhalten des Motors erzielt wird, wobei ein derartiges Drehverhalten des Motors vorteilhaft ohne Umschaltvorgänge erfolgt.

Dieses Drehverhalten des Motors ist besonders bei Schraubarbeiten mit einem Elektrowerkzeug vorteilhaft.
Bei Gleichstrombetrieb des Stromwendermotors kommt ein Pulsweitenmodulator sinngemäß zur Anwendung.

Die Erfindung wird nachstehend anhand der Zeichnung näher erläutert.

Dabei zeigen:
- Fig. 1: eine Schaltungsanordnung der elektronischen Steuerung für einen Stromwendermotor,
- Fig. 2: eine Halbwellendarstellung einer Wechselstromspannung mit angeschnittenen Halbwellen,
- Fig. 3: eine Halbwellendarstellung mit einem ersten An-schnitt in ersten Bereichsabschnitten einer Wechselstromspannung und einem zweiten Anschnitt in zweiten Bereichsabschnitten,
- Fig. 4: eine grafische Darstellung des Motorstroms in Bezug zur Ausführung der Fig. 3,
- Fig. 5: eine Halbwellendarstellung mit einem variabel einstellbaren Anschnitt der Halbwellen einer Wechselstromspannung in ersten Bereichsabschnitten und ein variables Ausschneiden von Halbwellen in zweiten Bereichsabschnitten,
- Fig. 6: eine Halbwellendarstellung mit einem variabel einstellbaren Anschnitt der Halbwellen vom minimalen Anschnitt aufwärts bis hin zum maximalen Anschnitt der Halbwellen in sich wiederholenden Bereichsabschnitten einer Wechselstromspannung.

Elektrohandwerkzeuge sind überwiegend mit einer Elektronik zur Drehzahlsteuerung ausgestattet, indem bei Wechselstrombetrieb eine Phasenanschnittsteuerung und bei Gleichstrombetrieb ein Pulsweitenmodulator zur Anwendung kommt. Der Drehzahlsteuerungselektronik des Elektrowerkzeugs kann für bestimmte Anwendungsfälle eine zusätzliche Steuerung zur Erreichung eines an- und abschwellenden Drehmoments des Elektrowerkzeugmotors zugeordnet sein. Entsprechend ist die Drehzahlsteuerungselektronik derart ausgelegt, daß der Stromwendermotor des Elektrowerkzeugs sowohl mit variabler Drehzahl, als auch mit variabler, impulsartiger ruckender Drehzahl betreibbar ist.

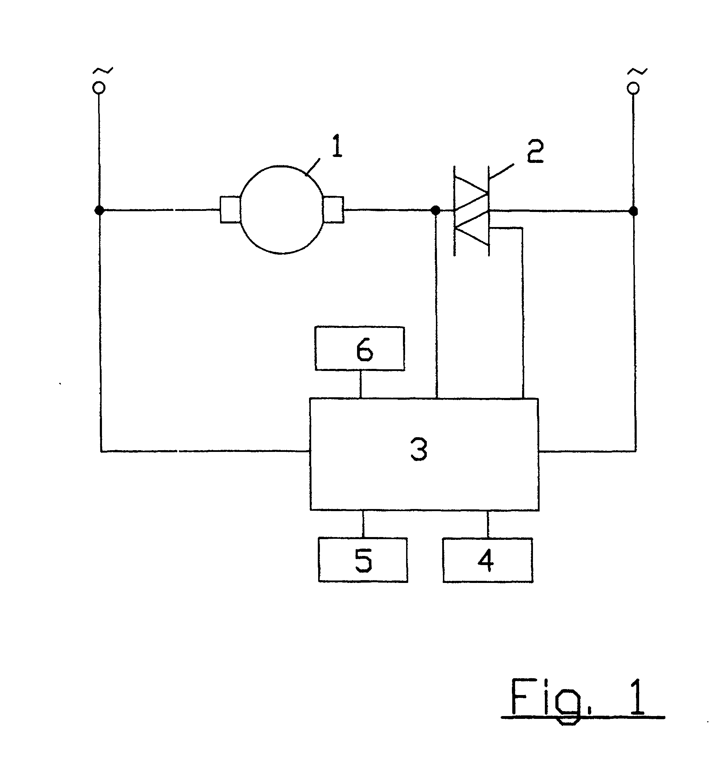

Fig. 1 zeigt eine Schaltungsanordnung einer solchen Steuerung. In Reihe mit dem Stromwendermotor 1 liegt ein Triac 2, dem eine Phasenanschnittsteuerung 3 zugeordnet ist. Die Phasenanschnittsteuerung 3 ist über eine erste, eine zweite und eine dritte Steuereinrichtung 4, 5, 6 betreibbar. Mit der ersten Steuereinrichtung 4 wird die Phasenanschnittsteuerung in bekannter Weise betätigt, und die Halbwellen einer Wechselstromspannung sind in ihrer Gesamtheit mit der ersten Steuereinrichtung 4 anschneidbar. Die erste Steuereinrichtung kann einen einstellbaren Widerstand beinhalten und als Drehpotentiometer oder als Schiebepotentiometer ausgelegt sein, wobei der Schiebepotentiometer vorzugsweise in einem Netzschalter angeordnet ist und mit dem Bedienungselement des Netzschalters betrieben wird.

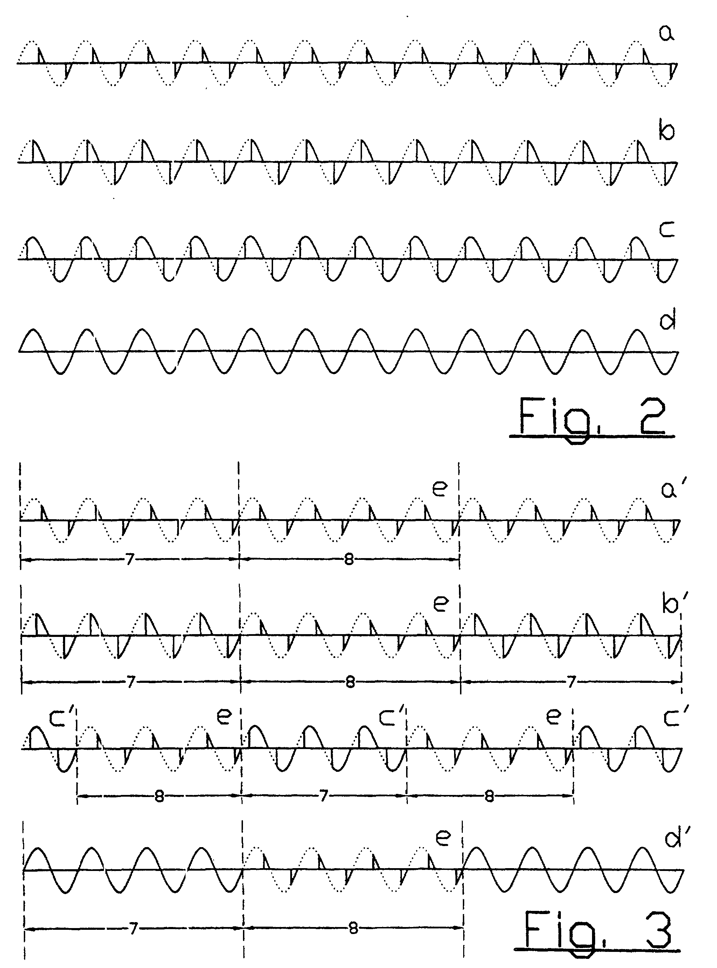

Fig. 2 zeigt einen standardgemäßen variablen Anschnitt a, b, c, d der Halbwellen einer Wechselstromspannung, der mit einer in bekannter Weise ausgelegten Phasenanschnittsteuerung 3 erzielt wird.
Zur Erreichung einer gepulsten ruckartigen Drehzahl bei einem Stromwendermotor 1, ist der Phasenanschnittsteuerung 3 eine erste und zweite Steuereinrichtung 4,5 zugeordnet. Mit der zweiten Steuereinrichtung 5, die auch einen einstellbaren Widerstand oder einen Stufenschalter beinhalten kann, sind entsprechende Bereichsabschnitte von Halbwellen einer Wechselstromspannung beeinflußbar, wodurch erste und zweite Bereichsabschnitte von Halbwellen einer Wechselstromspannung gebildet werden.

Fig. 3 zeigt derartige Bereichsabschnitte einer Wechselstromspannung. In erste Bereichsabschnitte 7 erfolgt ein erster Anschnitt a',b',c',d' der Halbwellen und in zweite Bereichsabschnitte 8 ein zweiter Anschnitt e, wobei zur Erreichung eines ruckartigen Drehverhaltens des Stromwendermotors die ersten und zweiten Bereichsabschnitte 7,8 sich fortwährend wiederholen. Der Anschnitt der Halbwellen in den zweiten Bereichsabschnitten 8 ist mit der zweiten Steuereinrichtung 5 einstellbar, und mit einer dritten Steuereinrichtung 6 werden die zweiten Bereichsabschnitte 8 in ihrer Weite und in ihrer Wiederholfrequenz eingestellt.

Bei einem standardgemäßen Anschnitt aller Halbwellen einer Wechselstromspannung wird der zweite Anschnitt e der Halbwellen mit der zweiten Steuereinrichtung 5 auf einen minimalen Anschnitt eingestellt oder dieser Anschnitt wird gänzlich aufgehoben, wodurch in bekannter Weise ein variabler Anschnitt der Halbwellen einer Wechselstromspannung mit der ersten Steuereinrichtung 4, entsprechend der Fig. 2, erzielt wird.
Mit einem ersten und einem zweiten Anschnitt der Halbwellen einer Wechselstromspannung bestehen ständig erste und zweite Bereichsabschnitte 7,8 von angeschnittenen Halbwellen, wobei der Anschnitt der Halbwellen der zweiten Bereichsabschnitte 8 unabhängig von den ersten Bereichsabschnitten 7 einstellbar ist, und mit dem Anschnitt der Halbwellen der ersten Bereichsabschnitte 7 ist der Elektromotor unabhängig von den zweiten Bereichsabschnitten 8 variabel betreibbar.

Soll nun ein mehr oder minder an- und abschwellendes Drehmoment und somit ein ruckartiges Drehverhalten bei einem Stromwendermotor erzielt werden, so wird mit der zweiten Steuereinrichtung 5 der zweite Anschnitt e der Halbwellen entsprechend fest eingestellt.
Dieser zweite Anschnitt der Halbwellen in den zweiten Bereichsabschnitten 8 ist unabhängig von dem ersten Anschnitt der Halbwellen in den ersten Bereichsabschnitten 7 fest einstellbar. Ist der fest eingestellte zweite Anschnitt geringer wie der erste Anschnitt, so werden die Halbwellen einer Wechselstromspannung insgesamt über die erste Steuereinrichtung 4 bis zu der fest eingestellten Anschnittshöhe 9 des zweiten Anschnitts angeschnitten, und im weiteren Verlauf der Anschnittsverringerung der Halbwellen bis hin zum minimalen oder keinen Anschnitt, werden die Halbwellen nur in den ersten Bereichsabschnitten 7 über die erste Steuereinrichtung 4 angeschnitten, wobei die mit der zweiten Steuereinrichtung 5 fest eingestellte Anschnittshöhe 9 der Halbwellen in den zweiten Bereichsabschnitten 8 konstant bleibt.

Die einstellbare Anschnittshöhe des zweiten Anschnitts der Halbwellen in den zweiten Bereichsabschnitten 8 kann auch den Bereich eines eingestellten Grenzdrehmoments kennzeichnen, bei dem in Abhängigkeit vom Drehmoment des Stromwendermotors der Anschnitt der Halbwellen in den zweiten Bereichsabschnitten 8 proportional zum ansteigenden Drehmoment des Motors über das eingestellte Grenzdrehmoment hinaus zunimmt, so daß auch hierdurch ein sich verstärkendes ruckartiges Drehverhalten des Stromwendermotors in Abhängigkeit vom Drehmoment erzielt wird. Das Drehmoment ist in bezug zur Höhe der Stromaufnahme des Motors zu sehen.

Zum Einschrauben großer Schrauben mit einem Elektrowerkzeug wird vorzugsweise eine geringere fest eingestellte Anschnittshöhe 9 der Halbwellen in den zweiten Bereichsabschnitten 8 eingestellt wie für kleine Schrauben, so daß am Anfang und im weiteren Verlauf des Schraubvorganges eine kontinuierliche, stetige Drehzahl erzielt wird, und zum Ende des Schraubvorganges erfolgt eine mehr oder minder ruckende Drehzahl, ohne daß hierbei Umschaltvorgänge erforderlich sind. Somit können bei einem einzigen Betriebszustand sowohl ein stetiges als auch ein sich proportional zum Drehmoment verstärkendes ruckendes Drehverhalten bei einem Elektromotor erzielt werden.

Der hier beschriebene erste und zweite Anschnitt in ersten und zweiten Bereichsabschnitten einer Wechselstromspannung wird anhand eines Diagramms noch näher erläutert.

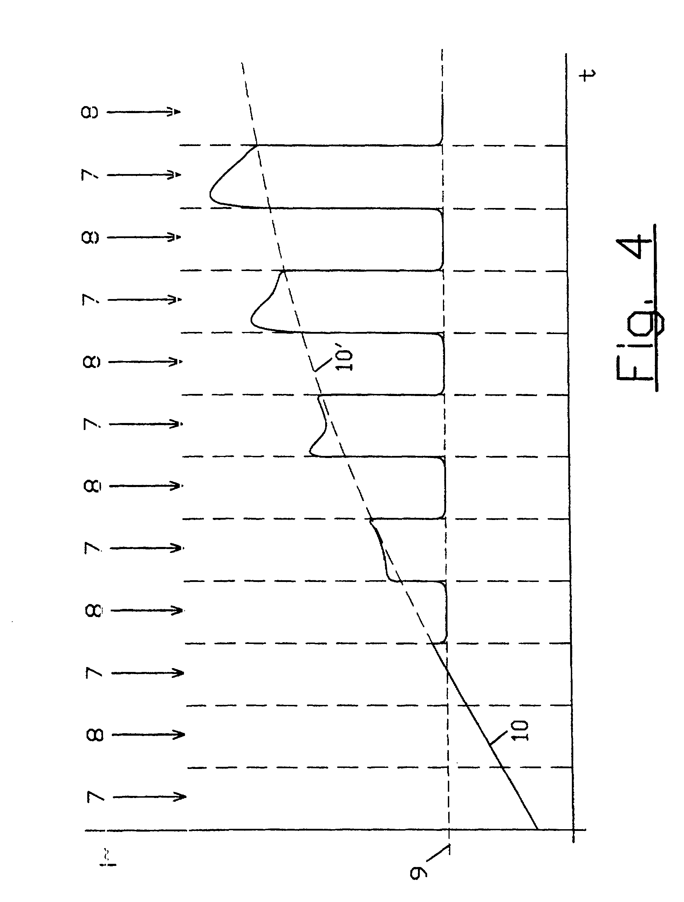

Fig.4 zeigt ein Diagramm über den Stromverlauf während des Motorbetriebes bei einem stetigen und bei einem mehr oder minder ruckartigen Drehverhalten des Stromwendermotors. Die Wechselstromspannung ist durch die Drehzahlsteuerungselektronik des Stromwendermotors in ein entsprechendes Raster, bestehend aus erste und zweite Bereichsabschnitte 7,8 von Halbwellen, aufgeteilt. Mit der ersten Steuereinrichtung 4 werden alle Halbwellen bis zu der mit der zweiten Steuereinrichtung 5 fest eingestellten Anschnittshöhe 9 der Halbwellen in den zweiten Bereichsabschnitten 8 angeschnitten. Die Stromkurve 10 kennzeichnet den kontinuierlich ansteigenden Stromverlauf während eines Schraubvorganges bei einem stetigen Drehverhalten des Stromwendermotors bis zu der einstellbaren Anschnittshöhe 9 der zweiten Bereichsabschnitte 8. Danach verläuft eine theoretische Stromkurve 10' gestrichelt weiter. Im weiteren Verlauf des Schraubvorganges erhöht sich das hierfür erforderliche Drehmoment und somit auch die Stromaufnahme des Stromwendermotors, wobei eine Stromaufnahme des Stromwendermotors über die fest einstellbare Anschnittshöhe 9 der zweiten Bereichsabschnitte 8 hinaus der Strom in den zweiten Bereichsabschnitten 8 etwa konstant bleibt, und in den ersten Bereichsabschnitten 7 steigt der Strom proportional zu der theoretischen Stromkurve 10' an. Übersteigt der Strom in den ersten Bereichsabschnitten 7 den Strom in den zweiten Bereichsabschnitten 8, so sinkt die Drehzahl des Stromwendermotors in den zweiten Bereichsabschnitten 8 entsprechend ab, wodurch jeweils ein entsprechender erhöhter Anstieg des Stroms in den ersten Bereichsabschnitten 7 hervorgerufen wird.
Mit der hier dargelegten Lösung wird ein gleitender sanfter Übergang vom variablen Drehverhalten zum ruckenden Drehverhalten des Stromwendermotors erzielt.

Nach Fig.3 wird bei einem einzigen Betriebszustand sowohl ein stetiges als auch ein ruckendes Drehverhalten bei einem Elektromotor erzielt durch unterschiedliches Anschneiden der Halbwellen in ersten und zweiten Betriebsabschnitten einer Wechselstromspannung. Dieses Drehverhalten eines Stromwendermotors kann auch durch variables Anschneiden der Halbwellen in erste Betriebsabschnitte und durch Ausblenden von Halbwellen in zweite Bereichsabschnitte erzielt werden.

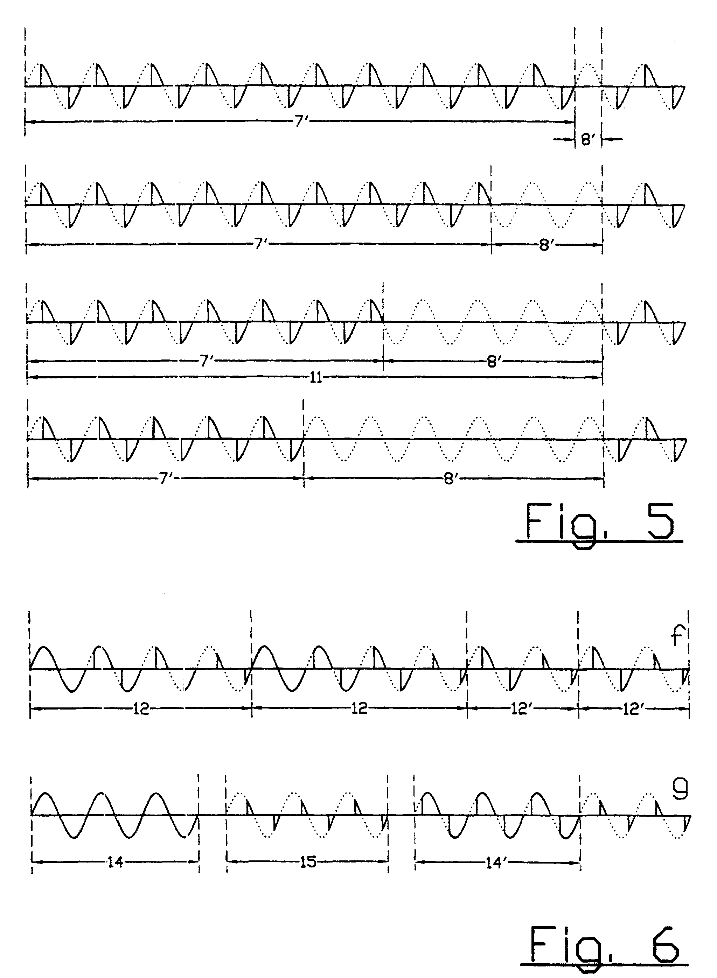

Fig.5 zeigt eine derartige Lösung. Ein variables Anschneiden der Halbwellen einer Wechselstromspannung mit der ersten Steuereinrichtung 4 der Phasenanschnittsteuerung erfolgt in den ersten Bereichsabschnitten 7' in bekannter Weise. Die ersten Bereichsabschnitte 7' der Fig.5 zeigen lediglich jeweils den gleichen Anschnitt. In den zweiten Bereichsabschnitten 8' werden mit der zweiten Steuereinrichtung 5 eine variabel einstellbare Anzahl von Halbwellen ausgeblendet, indem mit der zweiten Steuereinrichtung die Weite der zweiten Bereichsabschnitte 8' variabel einstellbar ist. Die minimale Anzahl der ausblendbaren Halbwellen in den zweiten Bereichsabschnitten 8' umfaßt eine Halbwelle. Die Weite von den ersten und den zweiten Bereichsabschnitten 7';8' umfaßt jeweils einen Gesamtbereichsabschnitt 11. Die Weite des Gesamtbereichsabschnittes 11 einer Wechselstromspannung kann vorteilhaft jeweils gleich sein, und der Gesamtbereichsabschnitt wiederholt sich fortwährend, somit sind die ersten und die zweiten Bereichsabschnitte 7';8' in ihrer Weite mit der zweiten Steuereinrichtung 5 derart variabel einstellbar, daß bei einer größeren Einstellung der Weite des zweiten Bereichsabschnittes 8' sich die Weite des ersten Bereichsabschnittes 7' um den gleichen Wert verringert. Die Weite des Gesamtbereichsabschnittes 11 kann auch unterschiedlich einstellbar sein.

Der variable Anschnitt der Halbwellen in den ersten Bereichsabschnitten 7' und das Ausschneiden von Halbwellen in den zweiten Bereichsabschnitten 8' kann mit Hilfe eines Mikrokontrollers erfolgen, wobei die Einstellung der Weite der zweiten Bereichsabschnitte 8' am Drehmoment des Stromwendermotors gekoppelt sein kann. Die Einstellung des Drehmoments zur Ausblendung von Halbwellen in den zweiten Bereichsabschnitten 8' wird ebenfalls mit der zweiten Steuereinrichtung 5 bestimmt. Der Mikrokontroller ist so programmiert, daß beim Erreichen des eingestellten Drehmoments mindestens eine Halbwelle ausgeblendet wird, und mit einem zunehmenden Drehmoment die Ausblendung von Halbwellen in den zweiten Bereichsabschnitten 8' proportional zum ansteigenden Drehmoment zunimmt, so daß bei einem zunehmenden Drehmoment ein sich verstärkendes ruckendes Drehverhalten des Stromwendermotors ergibt. Die Weite der ersten Bereichsabschnitte 7' können auch konstant gehalten werden, indem die Weite der zweiten Bereichsabschnitte 8' entsprechend der Zunahme der ausgeblendeten Halbwellen sich vergrößert, und hierdurch die Weite der Gesamtbereichsabschnitte 11 sich um den gleichen Wert vergrößert.

Fig.6 zeigt eine weitere Lösung womit ein stetiges und ein ruckendes Drehverhalten bei einem Stromwendermotor erreicht wird. Mit der zweiten Steuereinrichtung 5 ist hier die Phasenanschnittsteuerung so beeinflußbar, daß in Bereichsabschnitten von Halbwellen einer Wechselstromspannung, bei einer periodischen Wiederholung dieser Bereichsabschnitte, der Anschnitt der Halbwellen vom minimalen Anschnitt linear oder nicht linear aufwärts bis zum maximalen Anschnitt erfolgt, wobei dieser Vorgang am Drehmoment des Stromwendermotors gekoppelt sein kann. Dieser Verlauf des Anschnitts der Halbwellen der Bereichsabschnitte 12 ist in der ersten Halbwellendarstellung f der Fig.6 dargestellt. Den Beginn des Anschnittsverlaufs der Halbwellen ist variabel mit der ersten Steuereinrichtung (4) bestimmbar. Der mit der ersten Steuereinrichtung variabel einstellbare Beginn des Anschnitts der Halbwellen kennzeichnet die Bereichsabschnitte 12' der ersten Halbwellendarstellung f der Fig.6. Die Anzahl der Halbwellen in den Bereichsabschnitten mit einem minimalen Anschnitt und die Anzahl der Halbwellen mit einem maximalen Anschnitt sind entsprechend bestimmbar. Die zweite Halbwellendarstellung g der Fig.6 zeigt solche Halbwellen 14, 14', 15, wobei auch hier der Beginn des Anschnittsverlaufs der Halbwellen mit der ersten Steuereinrichtung 4 variabel einstellbar ist.

Das hier beschriebene Anschneiden von Halbwellen einer Wechselstromspannung mit einer Phasenanschnittsteuerung zur Erreichung eines stetigen als auch eines ruckenden Drehverhaltens bei einem Stromwendermotor kann auch sinngemäß bei einer Gleichstromspannung mit einem Pulsweitenmodulator erfolgen. Der Triac 2 ist dann durch einen Transistor ersetzt, und anstatt des Anschnitts von Halbwellen einer Wechselstromspannung wird Gleichstromspannung in entsprechenden Abschnitten unterschiedlich ausgeschnitten. Auch bei einem Pulsweitenmodulator kommt die erste und die zweite Steuereinrichtung 4, 5 hierfür zur Anwendung, wobei auch die dritte Steuereinrichtung 6 den Pulsweitenmodulator zugeordnet sein kann.

Eine Steuerung für einen Stromwendermotor, bei der mehrere Steuereinrichtungen für den Betrieb einer Drehzahlsteuerungseinrichtung zur Anwendung kommen, womit eine impulsartige Drehzahl erzielt wird, kommt vorteilhaft bei Elektroschraubund Elektrobohrwerkzeugen zur Anwendung.

Eine impulsartige Drehzahl bei Elektrowerkzeugen ist unter anderem bei komfortablen Anbohren in allen Materialien ohne anzukörnen besonders gut geeignet, ohne daß hierbei der Bohrer verläuft, und ein derartiges Drehverhalten des Bohrers erlaubt ein bequemes und sicheres Bohren in Blech und Aluminium. Weiterhin ist eine impulsartige Drehzahl vorteilhaft bei kraftaufwendigen Schraubarbeiten anwendbar, vor allem bei schwer einzudrehenden oder schwer zu lösenden Schrauben.

Die Erfindung ist nicht auf die beschriebenen und dargestellten Ausführungsbeispiele beschränkt, sondern sie kann vielseitig bei elektronisch steuerbaren Stromwendermotoren zum Einsatz kommen.

## Patentansprüche

1. Steuerung mit einem Stromwendermotor (1), der mittels einer Phasenanschnittsteuerung (3) mit einem stetigen als auch mit einem ruckartigen Drehverhalten betrieben ist, wozu der Phasenanschnittsteuerung (3) eine erste und eine zweite Steuereinrichtung (4,5) für einen ersten und einen zweiten Anschnitt (a',b',c',d';e) der Halbwellen einer Wechselstromspannung zugeordnet ist,
**dadurch gekennzeichnet,**
**daß** während des Betriebes des Stromwendermotors (1) ohne Umschaltvorgänge und bei einem sanften Übergang vom stetigen zum ruckenden Drehverhalten sowohl ein stetiges als auch ein ruckendes Drehverhalten des Stromwendermotors (1) erzielt wird durch eine rastermäßige ständige Aufteilung der Halbwellen der Wechselstromspannung in ersten und zweiten Bereichsabschnitten (7,8) bei einer fest eingestellten Anschnittshöhe (9) der Halbwellen in den zweiten Bereichsabschnitten (8),
**daß** mit der ersten Steuereinrichtung (4) alle Halbwellen einer Wechselstromspannung variabel anschneidbar sind, und mit der zweiten Steuereinrichtung (5) der Anschnitt der Halbwellen in den zweiten Bereichsabschnitten (8) einstellbar ist, wobei der Anschnitt der Halbwellen mit der ersten Steuereinrichtung (4) in den ersten und in den zweiten Bereichsabschnitten (7,8) vom maximalen Anschnitt bis hin zur fest eingestellten Anschnittshöhe (9) der Halbwellen in den zweiten Bereichsabschnitten (8) erfolgt, und im weiteren Verlauf der Anschnittsverringerung der Halbwellen bis hin zum minimalen Anschnitt, die Halbwellen der Wechselstromspannung nur in den ersten Bereichsabschnitten (7) mit der ersten Steuereinrichtung (4) angeschnitten werden, wobei die mit der zweiten Steuereinrichtung (5) fest eingestellte Anschnittshöhe (9) der Halbwellen in den zweiten Bereichsabschnitten (8) konstant bleibt.

2. Steuerung nach Anspruch 1,
**dadurch gekennzeichnet, daß** mit der ersten Steuereinrichtung (4) der erste variable Anschnitt (a',b',c',d') der Halbwellen in den ersten Bereichsabschnitten (7) unabhängig von dem zweiten Anschnitt (e) der Halbwellen in den zweiten Bereichsabschnitten (3) durchführbar ist, und mit der zweiten Steuereinrichtung (5) die Anschnittshöhe (9) des zweiten Anschnitts (e) der Halbwellen unabhängig von der ersten Steuereinrichtung (4) einstellbar ist.

3. Steuerung nach Anspruch 1 und 2,
**dadurch gekennzeichnet, daß** die einstellbare Anschnittshöhe (9) des zweiten Anschnitts der Halbwellen in den zweiten Bereichsabschnitten (8) den Bereich eines eingestellten Grenzdrehmoments kennzeichnet, bei dem in Abhängigkeit vom Drehmoment des Stromwendermotors (1) der Anschnitt der Halbwellen in den zweiten Bereichsabschnitten (8) proportional zum ansteigenden Drehmoment des Motors über das eingestellte Grenzdrehmoment hiraus zunimmt.

4. Steuerung nach Anspruch 1 bis 3,
**dadurch gekennzeichnet, daß** der zweite Anschnitt (e) der Halbwellen mit der zweiten Steuereinrichtung (5) variabel von einem geringen oder keinen Anschnitt bis hin zum maximalen Anschnitt einstellbar ist, und mit einer dritten Steuereinrichtung (6) die Weite der zweiten Bereichsabschnitte (8) und somit die Wiederholfrequenz dieser Bereichsabschnitte (8) einstellbar ist.

5. Steuerung nach Anspruch 1,
**dadurch gekennzeichnet, daß** während des Betriebs des Stromwendermotors (1) ohne Umschaltvorgänge sowohl ein stetiges als auch ein ruckendes Drehverhalten des Stromwendermotors (1) erzielt wird durch variables Anschneiden der Halbwellen einer Wechselstromspannung mit einer ersten Steuereinrichtung (4) in ersten Bereichsabschnitten (7') und durch ständiges Ausblenden von Halbwellen in zweiten Bereichsabschnitten (8') mit einer zweiten Steuereinrichtung (5), wobei das Ausblenden der Halbwellen in den zweiten Bereichsabschnitten am Drehmoment des Strcmwendermotors (1) gekoppelt ist, indem beim Erreichen des durch die zweite Steuereinrichtung (5) eingestellten Drehmoments mindestens eine Halbwelle ausgeblendet wird, und bei einem zunehmenden Drehmoment die Ausblendung von Halbwellen in den zweiten Bereichsabschnitten (8') proportional zum ansteigenden Drehmoment zunimmt.

6. Steuerung nach Anspruch 5,
**dadurch gekennzeichnet, daß** die Weite eines ersten und die Weite eines zweiten Bereichsabschnittes (7';8') jeweils einen Gesamtbereichsabschnitt (11) bilden, und dieser Gesamtbereichsabschnitt wiederholt sich fortwährend, wobei die Weite der Gesamtbereichsabschnitte stets gleich ist, oder sich um den Wert des zweiten Bereichsabschnitts 8' vergrößert.

7. Steuerung rach Anspruch 1,
**dadurch gekennzeichnet, daß** mit einer ersten Steuereinrichtung (4) in einem ersten Bereichsabschnitt einer Wechselstromspannung variable Drehzahlen erzielt werden, und mit einer zweiten Steuereinrichtung (5) die Phasenanschnittsteuerung (3) so beeinflußbar ist, daß innerhalb von nacheinander folgenden zweiten Bereichsabschnitten (12) einer Wechselstromspannung der Anschnitt der Halbwellen in diesen zweiten Bereichsabschnitten (12) linear oder nicht linear bis hin zum maximalen Anschnitt zunimmt, wobei der Beginn der Höhe des Anschnitts (12') der Halbwellen in den zweiten Bereichsabschnitten (12) mit der ersten Steuereinrichtung (4) bestimmt wird.

8. Steuerung nach Anspruch 7,
**dadurch gekennzeichnet, daß** die Anzahl der Halbwellen mit einem minimaler und einem maximalen Anschnitt in den zweiten Bereichsabschnitten (12) bestimmbar sind, und der Beginn einer periodischen Wiederholung des jeweils zunehmenden Anschnitts bis hin zum maximalen Anschnitt in den zweiten Bereichsabschnitten (12) am Drehmoment des Stromwendermotors gekoppelt ist.

9. Steuerung nach Anspruch 1 bis 8,
**dadurch gekennzeichnet, daß** das Anschneiden und/oder Ausblenden von Halbwellen einer Wechselstromspannung mit einer Phasenanschnittsteuerung in ersten und zweiten Bereichsabschnitten (7,8;7',8') sowie das Anschneiden der Halbwellen vom minimalen Anschnitt bis hin zum maximalen Anschnitt der Halbwellen in einstellbaren Bereichsabschnitten (12;12'), bei Gleichstromspannung durch Ausschnitte der Gleichstromspannung in den ersten und zweiten Bereichsabschnitten (7,8;7', 8',12;12') mittels eines Pulsweitenmodulators erfolgt.

10. Steuerung nach Anspruch 9,
**dadurch gekennzeichnet, daß** die erste, die zweite und die dritte Steuereinrichtung (4,5,6) dem Pulsweitenmodulator zugeordnet ist.

## Claims

1. Control with a commutator motor (1) which is operated by means of a phase cutting control (3) with a continuous and with a spasmodic rotational behaviour, for which purpose the phase cutting control (3) is allotted a first and a second control device (4, 5) for a first and a second cutting (a', b', c', d'; e) of the half waves of an alternating current voltage,
**characterised in that**
during operation of the commutator motor (1) without commutation processes and with a smooth transition from continuous to spasmodic rotational behaviour both a continuous and a spasmodic rotational behaviour of the commutator motor (1) is achieved through a raster-like permanent splitting of the half waves of the alternating current voltage into first and second range sections (7, 8) with a fixed set cutting height (9) of the half waves in the second range sections (8), that with the first control device (4) all half waves of an alternating current voltage can be cut in variable manner, and the cut of the half waves in the second range sections (8) can be set with the second control device (5), whereby the cut of the half waves takes place with the first control device (4) in the first and in the second range sections (7, 8) from the maximum cut up to the fixed set cut height (9) of the half waves in the second range sections (8), and in the further course of the cutting reduction of the half waves down to the minimum cut, the half waves of the alternating current voltage are only cut in the first range sections (7) with the first control device (4) whereby the cut height (9) of the half waves fixedly set with the second control device (5) remains constant in the second range sections (8).

2. Control according to claim 1 **characterised in that** with the first control device (4) the first variable cut (a', b', c', d') of the half waves in the first range sections (7) can be carried out independently of the second cut (e) of the half waves in the second range sections (8), and with the second control device (5) the cut height (9) of the second cut (e) of the half waves can be set independently of the first control device (4).

3. Control according to claims 1 and 2
**characterised in that** the adjustable cut height (9) of the second cut of the half waves in the second range sections (8) characterises the range of a set boundary torque at which in dependence on the torque of the commutator motor (1) the cut of the half waves in the second range sections (8) increases proportional to the rising torque of the motor beyond the set boundary torque.

4. Control according to claims 1 to 3
**characterised in that** the second cut (e) of the half waves can be set with the second control device (5) variable from a small or no cut up to the maximum cut, and the width of the second range sections (8) and thus the repeat frequency of these range sections (8) can be set with a third control device (6).

5. Control according to claim 1 **characterised in that** during operation of the commutator motor (1) without commutation processes both a constant and also a spasmodic rotational behaviour of the commutator motor (1) is achieved through variable cutting of the half waves of an alternating current voltage with a first control device (4) in first range sections (7') and through permanent fading out of the half waves in the second range sections (8') with a second control device (5) whereby the fading out of the half waves in the second range sections is coupled to the torque of the commutator motor (1) **in that** on reaching the torque set by the second control device (5) at least one half wave is faded out, and with an increasing torque the fading out of half waves in the second range sections (8') increases proportional to the rising torque.

6. Control according to claim 5 **characterised in that** the width of a first and the width of a second range section (7', 8') together form one complete range section (11), and this complete range section is repeated continually, whereby the width of the complete range sections is always the same or is increased by the value of the second range section 8'.

7. Control according to claim 1 **characterised in that** with a first control device (4) in a first range section of an alternating current voltage variable speeds are obtained, and with a second control device (5) the phase cut control (3) can be influenced so that within successive second range sections (12) of an alternating current voltage the cut of the half waves in these second range sections (12) increases linearly or non-linearly up to the maximum cut, whereby the start of the level of the cut (12') of the half waves in the second range sections (12) is determined with the first control device (4).

8. Control according to claim 7 **characterised in that** it is possible to designate the number of half waves with a minimum and a maximum cut in the second range sections (12), and the start of a periodic repeat of each increasing cut up to the maximum cut in the second range sections (12) is coupled to the torque of the commutator motor.

9. Control according to claims 1 to 8 **characterised in that** the cutting and/or fading out of the half waves of an alternating current voltage with a phase cut control in the first and second range sections (7, 8; 7', 8') as well as the cutting of the half waves from minimum cut up to the maximum cut of the half waves in adjustable range sections (12;12') takes place by means of a pulse width modulator in the case of direct current voltage through cut-outs of the direct current voltage in the first and second range sections (7, 8; 7', 8', 12; 12').

10. Control according to claim 9 **characterised in that** the first, second and third control device (4, 5, 6) are associated with the pulse width modulator.

## Revendications

1. Commande pour moteur à collecteur (1) piloté par commande de coupe de phase (3) avec comportement rotatoire aussi bien continu que saccadé, deux dispositifs de commande (4, 5), dont un premier pour une première coupe et un deuxième pour une deuxième coupe (a', b', c', d' ; e) des demi-ondes d'une tension en courant alternatif, étant coordonnés à la commande par coupe (3),
**caractérisée en ce que**,
pendant l'exploitation du moteur à collecteur (1) sans opérations de commutation et lors d'un passage en douceur du comportement rotatoire continu au comportement rotatoire saccadé, un comportement rotatoire continu tout comme un comportement rotatoire saccadé du moteur à collecteur (1) est obtenu par une répartition permanente en forme de réseau des demi-ondes d'une tension en courant alternatif, dans les premiers et les deuxièmes intervalles de fonctionnement (7, 8), à une hauteur de coupe (9) qui est réglée fixement dans les deuxièmes intervalles de fonctionnement (8),
et que toutes les demi-ondes d'une tension en courant alternatif peuvent être coupées variablement à l'aide du premier dispositif de commande (4) tandis le deuxième dispositif de commande (5) permet de régler la coupe des demi-ondes dans les deuxièmes intervalles de fonctionnement (8), la coupe des demi-ondes à l'aide du premier dispositif de commande (4) s'effectuant dans les premiers et les deuxièmes intervalles de fonctionnement (7, 8), en allant de la coupe maximale jusqu'à la hauteur de coupe réglée fixement (9) dans les deuxièmes intervalles de fonctionnement (8), les demi-ondes de tension en courant alternatif n'étant coupées, à l'aide du premier dispositif de commande (4), que dans les premiers intervalles de fonctionnement (7), au cours de la réduction suivante jusqu'à la coupe minimale des demi-ondes, la hauteur de coupe (9) réglée fixement, par le deuxième dispositif de commande (5), demeurant constante dans les deuxièmes intervalles de fonctionnement (8) de fonctionnement.

2. Commande selon la revendication 1,
**caractérisée en ce que**
le premier dispositif de commande (4) permet d'exécuter la première coupe variable (a', b', c', d') des demi-ondes, dans les premiers intervalles de fonctionnement (7), indépendamment de la deuxième coupe (e) des demi-ondes dans les deuxièmes intervalles de fonctionnement (8),
et que le deuxième dispositif de commande (5) permet de régler la hauteur (9) de la deuxième coupe (e) des demi-ondes, indépendamment du premier dispositif de commande (4).

3. Commande selon les revendications 1 à 2,
**caractérisée en ce que**
la hauteur de coupe réglable (9) de la deuxième coupe des demi-ondes, dans le deuxième intervalle de fonctionnement (8), caractérise la plage d'un couple limite réglé, lors duquel, en dépendance du couple de rotation du moteur à collecteur (1), la coupe des demi-ondes, dans les deuxièmes intervalles de fonctionnement (8), augmentent au-delà du couple limite, proportionnellement au couple de rotation croissant du moteur.

4. Commande selon les revendications 1 à 3,
**caractérisée en ce que**
la deuxième coupe (e) des demi-ondes peut être variée, à partir d'un couple faible ou d'aucun, jusqu'à la coupe maximale et que la largeur du deuxième intervalle de fonctionnement (8) et, de ce fait, la fréquence de répétition des intervalles de fonctionnement (8) peuvent être régulées par un troisième dispositif de commande (6).

5. Commande selon la revendication 1,
**caractérisée en ce que**,
pendant le fonctionnement du moteur à collecteur (1) sans opérations de commutation, un comportement rotatoire aussi bien continu que saccadé du moteur à collecteur (1) est obtenu par coupe variable des demi-ondes d'une tension à courant alternatif, dans les premiers intervalles de fonctionnement (7'), à l'aide d'un premier dispositif de commande (4), et par suppression constante de demi-ondes dans les deuxièmes intervalles de fonctionnement (8') à l'aide d'un deuxième dispositif de commande (5), la suppression des demi-ondes dans les deuxièmes intervalles de fonctionnement étant coordonnée au couple de rotation du moteur à collecteur (1), une demi-onde au moins étant supprimée lorsque le couple de rotation, réglé par le deuxième dispositif de commande (5), est atteint et lors d'un couple de rotation croissant, la suppression des demi-ondes augmentant proportionnellement au couple de rotation croissant dans les deuxièmes intervalles de fonctionnement (8').

6. Commande selon la revendication 5,
**caractérisée en ce que**
la largeur d'un premier intervalle et celle d'un deuxième intervalle de fonctionnement (7', 8') forment respectivement un intervalle complet (11) qui se répète incessamment, sa largeur demeurant toujours la même ou augmentant de la valeur du deuxième intervalle de fonctionnement (8').

7. Commande selon la revendication 1,
**caractérisée en ce que**,
dans un premier intervalle de fonctionnement d'une tension en courant alternatif, des vitesses de rotation variables peuvent être obtenues avec un premier dispositif de commande (4) et la commande par coupe (3) peut être influencée par un deuxième dispositif de commande (5) de sorte que, dans deux intervalles de fonctionnement successifs (12) de tension en courant alternatif, la coupe des demi-ondes augmente linéairement ou non linéairement dans ces deux intervalles de fonctionnement (12) jusqu'à la coupe maximale, le début de la hauteur de coupe (12') des demi-ondes dans les deux intervalles de fonctionnement (12) étant déterminé par le premier dispositif de commande (4).

8. Commande selon la revendication 7,
**caractérisée en ce que**
le nombre des demi-ondes à coupe minimale et coupe maximale peut être déterminé et que le début d'une répétition périodique, dans les deuxièmes intervalles de fonctionnement (12), de la coupe croissante respective jusqu'à la coupe maximale est coordonné au couple du moteur à collecteur.

9. Commande selon les revendications 1 à 8,
**caractérisée en ce que**
la coupe et/ou la suppression de demi-ondes d'une tension en courant alternatif, avec une commande par coupe, dans les premiers et les deuxièmes intervalles de fonctionnement (7, 8 ; 7', 8') ainsi que la coupe des demi-ondes du minimum jusqu'au maximum dans des intervalles de fonctionnement réglables (12 ; 12') s'effectue, en cas de tension en courant continu, par découpes de la tension en courant continu dans les premiers et les deuxièmes intervalles de fonctionnement (7, 8 ; 7', 8', 12 ; 12'), à l'aide d'un modulateur d'impulsions en largeur.

10. Commande selon la revendication 9,
**caractérisée en ce que**
le premier, le deuxième et le troisième dispositif de commande (4, 5, 6) sont coordonnés au modulateur d'impulsions en largeur.
